# EUROPEAN PATENT APPLICATION

(11) **EP 0 576 221 A2**
(43) Date of publication of application: **29.12.1993**
(21) Application number: 93304788.8
(22) Date of filing: 18.06.1993
(51) Int. Cl.: C09J 103/02

(54) **Starch based adhesives and the preparation thereof**

(30) Priority: 22.06.1992 GB 9213174
(71) Applicant: ABR FOODS LIMITED, London SW1X 7LR (GB)
(72) Inventor: Pool, Robin Anthony, Northampton NN3 1HN (GB)
(74) Representative: Wain, Christopher Paul

(57) **Abstract**

A method of making a starch-based adhesive comprises:
(i) forming a suspension of raw starch in an aqueous caustic alkali solution and maintaining the suspension at a controlled temperature until the starch is fully gelatinised,
(ii) mixing further raw starch and further caustic alkali with the alkaline starch solution from step (i) and maintaining the mixture at a controlled temperature so as to cause partial gelatinisation of the further starch, and
(iii) mixing further raw starch with the mixture from step (ii) to stop further gelatinisation of the partially gelatinised starch whereby an adhesive is obtained containing from 15 to 35% by weight of starch solids, of which 2 to 20% by weight is fully gelatinised, 20 to 70% by weight is partially gelatinised and the balance is ungelatinised.

This method, which is well adapted to automated production in a single tank mixing system, produces starch-based adhesives suitable for use in the manufacture of corrugated board.

## Description

This invention is concerned with starch-based adhesives such as are used in the manufacture of corrugated board and with the preparation of such adhesives.

With the development of machines for making corrugated board capable of sustaining much higher speeds than previously and using a wider range of papers in terms of both type and technical performance, new demands are being placed on the adhesive used. These demands include a requirement that the adhesive should form fibre-tearing bonds in the minimum time possible and that it should be adaptable to the range of operating conditions the machine is capable of producing.

A currently preferred starch-based adhesive and its production are described in British Patent 2023629B. This adhesive is an aqueous dispersion of partially gelatinised starch, the gelatinisation of which has been substantially arrested prior to complete gelatinisation, the dispersion also containing a lyophilic colloid. The amount of the latter is preferably up to 20% by weight, more preferably 3 to 12% by weight, based on the partially gelatinised starch. Suitable lyophilic colloids include, for example, carboxymethylcellulose, fully gelatinised starch, alginates, Irish moss extract, casein, and proteins.

A disadvantage of this adhesive is that it is not readily adaptable to automated production in a single tank mixing system, particularly where commercial concentrated caustic soda solutions are used.

We have now developed a method of making starch-based adhesives which is well adapted to automated production in a single tank mixing system (although other types of mixing systems can be used, if desired) and which gives novel starch-based adhesives having a desirable combination of characteristics.

According to one aspect of the invention, there is provided a method of making a starch-based adhesive, which comprises
(i) forming a suspension of raw starch in an aqueous caustic alkali solution and maintaining the suspension at a controlled temperature until the starch is fully gelatinised,
(ii) mixing further raw starch and further caustic alkali with the alkaline starch solution from step (i) and maintaining the mixture at a controlled temperature so as to cause partial gelatinisation of the further starch, and
(iii) mixing further raw starch with the mixture from step (ii) to stop further gelatinisation of the partially gelatinised starch whereby an adhesive is obtained containing from 15 to 35% by weight of starch solids, of which 2 to 20% by weight is fully gelatinised, 20 to 70%, preferably 20 to 50%, by weight is partially gelatinised and the balance is ungelatinised.

According to a further aspect of the invention there is provided a starch-based adhesive which is an aqueous dispersion of starch solids, the adhesive comprising from 15 to 35% by weight of starch solids, of which 2 to 20% by weight is fully gelatinised, 20 to 70%, preferably 20 to 50%, by weight is partially gelatinised, and the balance is ungelatinised.

For use in the manufacture of corrugated board, an adhesive should have a relatively high viscosity so that it does not flow appreciably from its area of application before setting and also good tack immediately on application. The viscosity of a starch-based adhesive is largely determined by its content of fully gelatinised starch and tack is largely determined by its content of partially gelatinised starch. It is a particular advantage of the method according to the invention that the partially gelatinised starch and the fully gelatinised starch present in the final product are formed in separate steps of the method. A consequence of this is that the control of partial gelatinisation in step (ii) is not so critical as it is in known processes where the process of partial gelatinisation is used to control the final viscosity of the adhesive.

Once the rate of gelatinisation for a given set of operating conditions, that is nature of raw starch, concentration of alkali, temperature, has been approximately established by preliminary trials, the amount of partially gelatinised starch in the final product can be adequately controlled in most cases simply by observing the time from the addition of caustic alkali at the beginning of step (ii) and, when the appropriate time has elapsed, stopping further gelatinisation by initiating step (iii).

Whilst control by time is normally adequate, the process may be alternatively or additionally controlled by continuous or intermittent monitoring of the viscosity of the mixture.

In a modification of the method according to the invention, all the caustic alkali required for steps (i) and (ii) is present in the initial suspension and at the end of step (i), that is when the starch present in the initial suspension is fully gelatinised, the alkaline starch solution obtained is mixed with an aqueous suspension of the further raw starch to effect step (ii).

In the method according to the invention, it is preferred that step (ii) should be carried out by adding the further raw starch and the further caustic alkali to the alkaline starch solution from step (i). In the modification described in the preceding paragraph, it is preferred that the alkaline starch solution from step (i) should be added to the aqueous suspension of raw starch. Step (iii) is preferably carried out by adding the further raw starch to the mixture from step (ii).

The caustic alkali used in the method according to the invention is preferably sodium hydroxide and for convenience of automated operation, the alkali is preferably used in the form of one of the commercially available concentrated aqueous solutions.

Steps (i) and (ii) of the method according to the invention are preferably carried out at temperatures from 15° to 50°C, more preferably 25° to 40°C. Step (iii) is normally carried out at the same temperature as step (ii).

One or more finishing agents, such as tackifying agents, preservatives and defoamers, may be added in step (ii) or step (iii). These additives may be used in the conventional proportions. A preferred class of finishing agents are boric acid and/or borate salts which are used as tackifying agents; suitable borate salts are, for example, borax pentahydrate, borax decahydrate and sodium metaborate.

One or more hydrophilic colloids, which are preferably borax compatible, may also be added, if desired, in step (i) or at the end of step (i). Suitable hydrophilic colloids include, for example, carboxymethylcellulose, alginates, Irish moss extract, casein, and proteins. Suitable proportions of such hydrophilic colloids are, for example, up to 20% by weight based on starch dry matter.

A resin capable of waterproofing the adhesive, for example a resorcinol-formaldehyde resin, may be added to the mixture in step (i) or at the end of step (i); it should not be added during or after step (ii) or in step (iii) as it may then undesirably affect the adhesive viscosity, gel point and rheology. A number of these waterproofing resins having a substantial buffering capacity so that it may be necessary to adjust, that is increase, the amount of caustic alkali used in step (i).

In order that the invention may be more fully understood, the following examples, in which all percentages are by weight, are given by way of illustration only.

### Example 1

Step (i):

50 Kg of a commercially available modified wheat starch were added to 800 kg of water and heated with stirring to 50°C. 25 Kg of 32% aqueous caustic soda solution were added and mixing was continued for 5 minutes. A further 1125 kg of cold water were added and this dilute starch solution was reheated to 33°C.

Step (ii):

200 Kg of the same starch was added to the dilute starch solution from step (i), followed by 8 kg of the same caustic soda solution. After 10 minutes mixing the viscosity of the mixture had increased by two Love Cup seconds.

Step (iii):

320 Kg of the same starch were added, followed by 3 kg of borax decahydrate. After a further ten minutes mixing, the batch had a viscosity of 16 Love Cup seconds and was pumped away to a storage tank.

The resulting adhesive gave improved performance compared to a conventional mix prepared from the same starch according to the conventional Steinhall or No-Carrier processes, in particular the applicator setting (the gap between the rolls of the applicator) could be reduced to half that required for the conventionally prepared adhesives.

### Example 2

Step (i):

20g of wheat starch were mixed into 300g of water warmed to 35°C. 20g of 40% aqueous caustic soda solution were added and the mixture was stirred for 10 minutes. After adding 400g of water, 65g of a proprietary resorcinol-formaldehyde resin was stirred in.

Step (ii):

This was followed by 80g of the same starch and a further 8g of caustic soda. The viscosity of the mixture was tested at 2 minute intervals and after 8 minutes, had risen from 8.3 to 11 Love Cup seconds.

Step (iii)

240g of starch were immediately added, followed by 1g borax and 3g of paraformaldehyde. The adhesive had a final viscosity of 18 Love Cup seconds.

Handmade samples of corrugated board made from precut single face attached to heavy kraft linerboard, using this adhesive and cut according to the test known as FEFCO-9, resisted the standard 250g load for a period in excess of 300 hours.

### Example 3

Modified process - step (i):

45 Kg of native wheat starch and 5 kg of a low viscosity grade sodium carboxymethyl-cellulose were added with stirring to 600 litres of water preheated to 40°C, in a contra-rotating paddle mixer. A solution of 13 kg of pearl caustic soda in water was added to this slurry, with stirring, and mixing was continued for 20 minutes.

Step (ii):

The resulting solution was slowly added to a slurry consisting of 1200 litres of water and 225 kg of commercial pearl corn starch maintained at 30°C. When fully mixed, the preparation showed a scale deflection of 33% on a Brookfield Viscosimeter. After 13 minutes had elapsed, a scale deflection of 47% was reached.

Step (iii):

A further 300 kg of corn starch was added, followed by 12 kg of borax decahydrate and preservative. After 20 minutes mixing the adhesive had a viscosity of 21 Love Cup seconds. It was employed to make heavy doublewall at speeds in excess of 200 metres/minute.

## Claims

1. A method of making a starch-based adhesive which comprises
(i) forming a suspension of raw starch in an aqueous caustic alkali solution and maintaining the suspension at a controlled temperature until the starch is fully gelatinised,
(ii) mixing further raw starch and further caustic alkali with the alkaline starch solution from step (i) and maintaining the mixture at a controlled temperature so as to cause partial gelatinisation of the further starch, and
(iii) mixing further raw starch with the mixture from step (ii) to stop further gelatinisation of ' the partially gelatinised starch whereby an adhesive is obtained containing from 15 to 35% by weight of starch solids, of which 2 to 20% by weight is fully gelatinised, 20 to 70% by weight is partially gelatinised and the balance is ungelatinised.

2. A modification of the method according to claim 1, in which all the caustic alkali required for steps (i) and (ii) is present in the initial suspension and at the end of step (i) the alkaline starch solution obtained is mixed with an aqueous suspension of the further raw starch to effect step (ii).

3. A method according to claim 1 or 2, in which from 20 to 50% by weight of the starch solids in the final adhesive consists of partially gelatinised starch.

4. A method according to any of claims 1 to 3, in which one or more finishing agents is/are added to the mixture in step (ii) or step (iii).

5. A method according to claim 4, in which the finishing agent is a tackifying agent, a preservative or a defoamer.

6. A method according to claim 5, in which the tackifying agent is boric acid and/or a borate salt.

7. A method according to claims 1 to 6, in which one or more hydrophilic colloids is/are added to the mixture in step (i) or at the end of step (i).

8. A method according to claim 7, in which the hydrophilic colloid is carboxymethylcellulose, an alginate, Irish moss extract, casein or a protein.

9. A method according to any of claims 1 to 8, in which a waterproofing resin is added to the mixture in step (i) or at the end of step (i) and before step (ii).

10. A method according to claim 9, in which the waterproofing resin is a resorcinol-formaldehyde resin.

11. A starch-based adhesive which is an aqueous dispersion of starch solids, the adhesive comprising from 15 to 35% by weight of starch solids, of which 2 to 20% by weight is fully gelatinised, 20 to 70% by weight is partially gelatinised, and the balance is ungelatinised.

12. An adhesive according to claim 11, in which from 20 to 50% by weight of the starch solids consists of partially gelatinised starch.

13. An adhesive according to claim 11 or 12, which comprises one or more tackifying agents, preservatives, and defoamers as finishing agents.

14. An adhesive according to claim 13, which comprises boric acid and/or one or more borate salts as tackifying agents.

15. An adhesive according to any of claims 11 to 14, which comprises one or more hydrophilic colloids.

16. An adhesive according to claim 15, in which the hydrophilic colloid is carboxymethylcellulose, an alginate, Irish moss extract, casein, or a protein.

17. An adhesive according to any of claims 11 to 16, which comprises a waterproofing resin.

18. An adhesive according to claim 17, in which the waterproofing resin is a resorcinol-formaldehyde resin.
